(19) Europäisches Patentamt
European Patent Office
Office européen des brevets

(11) Publication number: **0 022 110**
**B1**

(12) **EUROPEAN PATENT SPECIFICATION**

(45) Date of publication of patent specification: **22.06.83**

(51) Int. Cl.³: **B 01 F 17/00, C 10 L 1/32**

(21) Application number: **80850097.9**

(22) Date of filing: **18.06.80**

(54) **Emulsifier and its use for the manufacture of an emulsion in mineral oil.**

(30) Priority: **29.06.79 SE 7905716**

(43) Date of publication of application:
**07.01.81 Bulletin 81/1**

(45) Publication of the grant of the patent:
**22.06.83 Bulletin 83/25**

(84) Designated Contracting States:
**AT BE CH DE FR GB IT LI NL**

(56) References cited:
**US - A - 4 158 551**

**JAPANESE PATENTS REPORT, vol. 78, no. 48, 5th January 1979, Section H, petroleum page 4, no. E12—H6 Derwent Publications London, G.B. TOA NEKKEN K.K.: "Emulsified petroleum fuel oil"**

(73) Proprietor: **BEROL KEMI AB**
**S-444 01 Stenungsund (SE)**

(72) Inventor: **Hellsten, Karl Martin Edvin**
**Värsäddsvägen 4**
**S-444 05 Ödsmäl (SE)**
Inventor: **Johansson, Inger Gunilla**
**Box 77**
**S-440 92 Svanesund (SE)**
Inventor: **Karlsson, Birgit Tora Gunvor**
**Hasselgatan 4**
**S-444 00 Stenungsund (SE)**

(74) Representative: **Andersson, Rolf**
**BEROL KEMI AB Box 851**
**S-444 01 Stenungsund (SE)**

**EP 0 022 110 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Emulsifier and its use for the manufacture of an emulsion in mineral oil

The present invention relates to an emulsifier containing a mixture of a nonionic surface active ethylene oxide adduct and calcium dodecylbenzene sulphonate and its use for the manufacture of an emulsion of water in mineral oil.

For a long time experiments have been carried out to incorporate small amounts of water in mineral oil fuels to be used both in stationary fire-places and in internal combustion engines, especially in diesel engines. As a result of the water incorporation a decrease in the combustion temperature is achieved, which in turn causes less deposits of carbon and less risk of ash products on the heating surfaces. For diesel engines an essential decrease of the content of nitrogen oxides in the exhaust gases is achieved, leading to less air pollution, a factor of great importance in mining and heavy city traffic.

Earlier work within this area has among other things aimed at producing a microemulsion of water in oil, i.e. a thermodynamically stable system. However, this has been dependent on the addition of the same amount of surface active agents as the water addition desired. From an economical point of view this solution is unsuitable.

According to the present invention we have now found it possible to introduce into mineral oils a water amount of up to 50 times the weight of the emulsifier and to obtain an emulsion of water in the mineral oil which is stable for at least 20 minutes. The mineral oil which is of the diesel and fuel type. For the manufacture of the mineral oil emulsion, containing 1—10% by weight of water, a specific emulsifier is used in an amount adjusted to the amount of water. Normally the emulsifier is present in a concentration of 0,5—5 grams per litre of the emulsion. The emulsifier of the invention contains a mixture of

a) a nonionic surface active ethylene oxide adduct having the general formula

$$R(OC_2H_4)_nOH$$

in which R is an alkylphenyl group with 12—30 carbon atoms and n is an integer so chosen that the polyethylene glycol chain represents 50—60% by weight of the ethylene oxide adduct, and

b) the calcium salt of dodecylbenzene sulphonic acid, the weight ratio between the nonionic surface active ethylene oxide adduct and the calcium salt of dodecylbenzene sulphonic acid being from 80:20 to 40:60. Especially good properties are shown by emulsifiers, in which n in the nonionic surface active ethylene oxide adduct is so chosen that the polyethylene oxide chain represents 52—58% by weight of the ethylene oxide adduct and in which the weight ratio between the nonionic surface active ethylene oxide adduct and the calcium salt of dodecylbenzene sulphonic acid is from 40:60 to 65:45.

The handling and incorporation of the sulphonate compound may be made easier by dissolving it in a polar organic solvent, for example butanol.

The mineral oils preferably comprise oils known as diesel oil or fuel oil and defined by ASTM D 975 and ASTM D 396 respectively. Suitable oils are volatile diesel and fuel oils of the qualities No. 1—D and No. 1, but also the qualities No. 2—D and No. 2 may be used.

The nonionic surface active ethylene oxide adduct may be manufactured in a conventional way by reacting ethylene oxide in prescribed amounts to alkylphenols in an alkaline medium. The alkylphenols may be mono-, di-, or trialkyl substituted and contain 12—30 carbon atoms. Examples of suitable alkylphenols are dibutylphenol, tributylphenol, octylphenol, dioctylphenol, nonylphenol, dinonylphenol, and dodecylphenol. Especially good properties are shown by dinonylphenol, to which 9 moles ethylene oxide has been added per mole dinonylphenol.

The invention is further illustrated by the following Examples.

## Examples 1—4

A nonionic surface active ethylene oxide adduct obtained by reacting 1 mole dinonylphenol with 9 moles ethylene oxide in alkaline medium, and a 62% solution of calcium dodecylbenzene sulphonate in n-butanol were dissolved in 78 grams (95 ml) of fuel oil of the Swedish Standard No. 1 in the amounts stated in the Table below. To the solution was then added 5 ml of water with a hardness of 1,2°dH and the mixture was homogenized for 15 seconds by mechanical stirring. The quality of the emulsion obtained was evaluated according to a scale from 1 to 5, where the figure 1 stands for a very coarse emulsion and the figure 5 for a very fine one. The emulsion was then observed for half an hour and the time for forming a clear oil phase or a clear water phase was recorded. The observed time was called the stability time. The Table below shows the result of a set of tests carried out with different mixture ratios of the nonionic surface active ethylene oxide adduct and the calium dodecylbenzene sulphonate.

For comparison ethylene oxide adducts outside the scope of the invention were also tested. They were obtained by adding 6 moles ethylene oxide to 1 mole dinonylphenol (A) and 14 moles ethylene oxide to 1 mole dinonylphenol (B) respectively.

TABLE

| Example | Weight ratio ethylene oxide adduct/calcium dodecylbenzene-sulphonate | Added amount emulsifier gram | Emulsion Appearance | Emulsion Stability time, min. |
|---|---|---|---|---|
| 1 | 41/59 | 0,1 | 4 | 20 |
| 2 | 52/48 | 0,1 | 4 | 20 |
| 3 | 57/43 | 0,1 | 5 | 30 |
| 4 | 62/38 | 0,1 | 5 | 25 |
| A | 62/38 | 0,1 | 4 | 5 |
| B | 62/38 | 0,1 | 2 | 2 |

From the results it is evident that the emulsifiers in accordance with the invention have an excellent emulsifying effect and are superior to the emulsifiers in the comparison tests.

Examples 5—8

In the same manner as in Examples 1—4 the emulsifying ability of emulsifiers was examined, where the nonionic surface active ethylene oxide adduct was a reaction product between 1 mole nonylphenol and 6 moles ethylene oxide. For comparison, tests were also carried out on reaction products from 1 mole nonylphenol and 4 moles ethylene oxide (C) and 1 mole nonylphenol and 7 moles ethylene oxide (D).

TABLE

| Example | Weight ratio ethylene oxide adduct/calcium dodecylbenzene-sulphonate | Added amount emulsifier gram | Emulsion Appearance | Emulsion Stability time, min. |
|---|---|---|---|---|
| 5 | 41/59 | 0,5 | 4 | 20 |
| 6 | 52/48 | 0,5 | 5 | 30 |
| 7 | 62/38 | 0,5 | 5 | 25 |
| 8 | 52/48 | 0,2 | 5 | 30 |
| C | 52/48 | 0,2 | 4 | 4 |
| D | 52/48 | 0,2 | 3 | 3 |

From the results it is evident that the emulsifiers according to the invention are definitely superior to the emulsifiers in the comparison tests C and D.

Examples 9—12

In the same manner as in Examples 1—4 the emulsifying ability was tested for the following emulsifiers.

Example 9 Reaction product from 1 mole tributylphenol and 8 moles ethylene oxide.

Example 10 Reaction product from 1 mole dinonylphenol and 8 moles ethylene oxide.

Example 11 Reaction product from 1 mole nonylphenol and 10 moles ethylene oxide.

Example 12 Reaction product from 1 mole dinonylphenol and 11 moles ethylene oxide.

The following results were obtained.

TABLE

| Example | Weight ratio ethylene oxide adduct/calcium dodecylbenzene-sulphonate | Added amount emulsifier gram | Emulsion Appearance | Emulsion Stability time, min. |
|---|---|---|---|---|
| 9 | 52/48 | 0,1 | 5 | 20 |
| 10 | 79/21 | 0,1 | 5 | 17 |
| 11 | 52/48 | 0,1 | 5 | 25 |
| 12 | 52/48 | 0,1 | 5 | 18 |

All the emulsifiers have a surprisingly good emulsifying effect in comparison with the emulsifiers in tests A and B.

**Claims**

1. Emulsifier containing a mixture of a nonionic surface active ethylene oxide adduct and an anionic surface active agent characterized in that the nonionic surface active ethylene oxide adduct has the following general formula

$$R(OC_2H_4)_nOH$$

in which R is an alkylphenyl group having from 12 to 30 carbon atoms and n so chosen that the polyethylene glycol chain is from 50 to 60% by weight of the ethylene oxide adduct, and the anionic surface agent is the calcium salt of dodecylbenzene sulphonic acid, the weight ratio between the nonionic surface active ethylene oxide adduct and the calciumsalt of dodecylbenzene sulphonic acid being from 80:20 to 40:60.

2. Emulsifier according to claim 1, characterized in that n is chosen so that the polyethylene glycol chain is from 52—58% by weight of the ethylene oxide adduct.

3. Emulsifier according to claim 1 or 2, characterized in that the alkylphenyl group is dinonylphenyl.

4. Emulsifier according to claim 1, 2 or 3, characterized in that the weight ratio between the nonionic surface active ethylene oxide adduct and the calciumsalt of dodecylbenzene sulphonic acid is from 40:60 to 65:45.

5. Use of an emulsifier according to claim 1, 2, 3 or 4 for the manufacture of an emulsion of water in mineral oil characterized in that the amount of water being from 1 to 10% by weight of the weight of the emulsion.

6. Use according to claim 5, characterized in that the mineral oil is a diesel oil or fuel oil.

7. Use according to claim 5 or 6, characterized in that the amount of the emulsifier is from 0,5 to 5 grams per litre of the emulsion.

**Revendications**

1. Emulsionnant contenant un mélange d'un produit d'addition d'oxyde d'éthylène tensioactif non ionique et d'un agent tensioactif anionique, caractérisé en ce que le produit d'addition tensioactif non-ionique d'oxyde d'éthylène à la formule générale suivante:

$$R(OC_2H_4)_nOH$$

où R est un groupe alkylphényle ayant de 12 à 30 atomes de carbone et n est choisi de telle sorte que la chaîne polyéthylèneglycol représente 50 à 60% en poids du produit d'addition d'oxyde d'éthylène, l'agent tensioactif anionique étant le sel de calcium de l'acide dodécylbenzènesulfonique, le rapport pondéral entre le produit d'addition tensioactif non-ionique d'oxyde d'éthylène et le sel de calcium de l'acide dodécylbenzènesulfonique étant de 80:20 à 40:60.

2. Emulsionnant selon la revendication 1, caractérisé en ce que n est choisi de telle sorte que la chaîne polyéthylèneglycol représente 52—58% en poids du produit d'addition d'oxyde d'éthylène.

3. Emulsionnant selon l'une quelconque des revendications 1 ou 2, caractérisé en ce que le groupe alkylphényle est le dinonylphényle.

4. Emulsionnant selon l'une quelconque des revendications 1 à 3, caractérisé en ce que le rapport pondéral entre le produit d'additon tensioactif non-ionique d'oxyde d'éthylène et le sel de calcium de l'acide dodécylbenzènesulfonique est compris entre 40:60 et 65:45.

5. Utilisation d'un émulsionnant selon l'une quelconque des revendications 1 à 4 pour la préparation d'une émulsion d'eau dans de l'huile minérale, caractérisée en ce que la quantité d'eau est de 1 à 10% en poids du poids de l'émulsion.

6. Utilisation selon la revendication 5, caractérisée en ce que l'huile minérale est un combustible diesel ou un fuel oil.

7. Utilisation selon l'une quelconque des revendications 5 ou 6, caractérisée en ce que la quantité de l'émulsionnant est comprise entre 0,5 et 5 grammes par litre de l'émulsion.

**Patentansprüche**

1. Emulgator, enthaltend ein Gemisch aus einem nichtionschen oberflächenaktiven Ethylenoxid-Addukt und einem anionischen oberflächenaktiven Mittel, dadurch gekennzeichnet, daß das nichtionische oberflächenaktive Ethylenoxid-Addukt die folgende allgemeine Formel hat:

$$R(OC_2H_4)_nOH$$

in der R eine Alkylphenylgruppe mit 12 bis 30 Kohlenstoffatomen ist und n so gewählt ist, daß die Polyethylenglykol-Kette 50 bis 60 Gewichtsprozent des Ethylenoxid-Addukts ausmacht, und das anionische oberflächenaktive Mittel das Calciumsalz von Dodecylbenzolsulfonsäure ist, wobei das Gewichtsverhältnis zwischen dem nicht-ionischen oberflächenaktiven Ethylenoxid-Addukt und dem Calciumsalz von Dodecylbenzolsulfonsäure 80:20 bis 40:60 beträgt.

2. Emulgator nach Anspruch 1, dadurch gekennzeichnet, daß n so gewählt ist, daß die Polyethylenglykol-Kette 52 bis 58 Gewichtsprozent des Ethylenoxid-Addukts ausmacht.

3. Emulgator nach Anspruch 1 oder 2, dadurch gekennzeichnet, daß die Alkylphenylgruppe Dinonylphenyl ist.

4. Emulgator nach Anspruch 1, 2 oder 3, dadurch gekennzeichnet, daß das Gewichtsverhältnis zwischen dem nicht-ionischen oberflächenaktiven Ethylenoxid-Addukt und dem Calciumsalz von Dodecylbenzolsulfonsäure 40:60 bis 65:45 beträgt.

5. Verwendung eines Emulgators nach Anspruch 1, 2, 3 oder 4 zur Herstellung einer Emulsion von Wasser in Mineralöl, dadurch gekennzeichnet, daß die Wassermenge 1 bis 10 Gewichtsprozent des Gewichts der Emulsion beträgt.

6. Verwendung nach Anspruch 5, dadurch gekennzeichnet, daß das Mineralöl ein Dieselöl oder Heizöl ist.

7. Verwendung nach Anspruch 5 oder 6, dadurch gekennzeichnet, daß die Emulgatormenge 0,5 bis 5 Gramm pro Liter Emulsion beträgt.